# FASCICULE DE BREVET EUROPEEN

(11) **EP 3 206 856 B1**
(45) Date de publication et mention de la délivrance du brevet: **19.09.2018**
(21) Numéro de dépôt: 15780878.3
(22) Date de dépôt: 15.10.2015
(51) Int. Cl.: B29C 49/48, B29L 31/00, B29K 67/00, B29C 49/06, B29C 49/12

(54) **MOULE À PLAN DE JOINT SURÉLEVÉ POUR LA FABRICATION DE RÉCIPIENTS**
FORM MIT ERHÖHTER WAND ZUR HERSTELLUNG VON BEHÄLTERN
MOULD WITH RAISED LAND FOR MANUFACTURING CONTAINERS

(30) Priorité: 17.10.2014 FR 1460037
(43) Date de publication de la demande: 23.08.2017
(73) Titulaire: Sidel Participations, 76930 Octeville-sur-Mer (FR)
(72) Inventeur: DERRIEN, Mikaël, F-76930 Octeville-sur-mer (FR); BUNEL, Christophe, F-76930 Octeville-sur-Mer (FR)
(74) Mandataire: Siloret, Patrick
(86) Numéro de dépôt international: PCT/EP2015/073838
(87) Numéro de publication internationale: WO 2016/059136

(56) Documents cités:
- JP-A- 2001 088 202
- JP-A- 2008 254 244
- US-A- 4 769 206
- US-B2- 7 134 867

## Description

L'invention se rapporte à la fabrication des récipients, tels que bouteilles ou pots, obtenus par formage, et plus précisément par soufflage ou étirage soufflage, à partir d'ébauches en matière thermoplastique.

Pour fabriquer un récipient suivant la technique du soufflage, on commence par chauffer une ébauche (qu'il s'agisse d'une préforme ou d'un récipient intermédiaire ayant subi une première opération de soufflage à partir d'une préforme) à une température supérieure à la température de transition vitreuse de la matière constitutive de l'ébauche. On introduit ensuite l'ébauche dans un moule, puis on effectue le soufflage de l'ébauche en y injectant un gaz (tel que de l'air) sous haute pression (généralement supérieure à 20 bars).

La technique de l'étirage soufflage consiste, outre le soufflage, à étirer l'ébauche au moyen d'une tige coulissante, afin de minimiser le désaxement du récipient et d'uniformiser autant que possible la répartition de la matière.

Un récipient comporte une paroi latérale (également dénommée corps), un col qui s'étend à partir d'une extrémité supérieure du corps, et un fond qui s'étend à partir d'une extrémité inférieure du corps, à l'opposé du col. Le fond du récipient définit une assise par laquelle le récipient peut reposer sur une surface plane (telle qu'une table).

Le moule comprend une paroi définissant une cavité destinée à conférer sa forme au corps du récipient. Cette cavité est fermée, à une extrémité inférieure, par un fond de moule destiné à conférer sa forme au fond du récipient. Des moules selon l'art antérieur sont décrits dans les documents JP2001-088202A, JP2008-254244A, US4769-206A et US7134-867B2.

L'un des buts principaux visés aujourd'hui par les fabricants est la diminution de la quantité de matière utilisée, ce qui se traduit par une réduction du poids des récipients, quelle que soit la destination de ceux-ci (liquides plats, liquides gazéifiés, liquides introduits chauds dans les récipients). En contrepartie de cet allègement des récipients, on tente d'accroître leur rigidité au moyen d'artefacts liés soit au procédé de fabrication, soit au design, car la rigidité structurelle liée à la seule biorientation (orientation moléculaire axiale et radiale par rapport à l'axe central longitudinal du récipient) apparaît insuffisante.

Il arrive même que certains cahiers des charges (notamment pour des applications de remplissage à chaud ou HR - heat résistant) préconisent dans le même temps la réduction du poids et l'accroissement de la rigidité structurelle du récipient, ce qui accroît les difficultés de conception de celui-ci. Dans les applications HR, la rigidité structurelle du récipient peut être accrue par voie thermique au moyen d'une thermofixation (en anglais heat set) de la matière, consistant à maintenir le récipient en contact avec la paroi chauffée du moule, ce qui accroît le taux de cristallinité de la matière.

S'agissant plus particulièrement du fond du récipient, sa rigidité structurelle peut en outre être accrue (ou contrôlée) par voie mécanique au moyen d'une répartition locale spécifique de la matière (conduisant à un étirage supplémentaire de celle-ci), au moyen d'un moule muni d'une paroi fixe à l'empreinte du corps du récipient, et d'un fond de moule à l'empreinte du fond du récipient, ce fond de moule étant monté mobile par rapport à la paroi. Le récipient est d'abord soufflé au-delà de sa forme finale, dans une position basse du fond de moule, puis le fond de moule est déplacé vers une position haute correspondant à la forme finale du récipient.

Cette technique, dénommée "boxage", illustrée dans la demande de brevet français FR 2 938 464 (SIDEL PARTICIPATIONS) ou son équivalent américain US 2012/031916, permet d'améliorer la tenue mécanique du fond du récipient, notamment au niveau de l'assise.

Dans un tel moule, un interstice est prévu entre le fond de moule, monté sur un vérin de guidage, et la paroi pour maintenir entre ces deux pièces un jeu fonctionnel ayant une double fonction : d'une part, permettre le déplacement sans coincement du fond de moule par rapport à la paroi ; d'autre part, former un évent de décompression permettant l'évacuation de l'air piégé entre le moule et le récipient au cours du soufflage.

Cette technique donne satisfaction mais demeure perfectible.

En effet, le jeu fonctionnel entre le moule et le fond de moule ne peut être inférieur à la précision de guidage du vérin, qui est de l'ordre de quelques dixièmes de millimètres pour une course de l'ordre de 20 à 40 mm.

En d'autres termes, ce jeu fonctionnel est du même ordre de grandeur que l'épaisseur de matière du récipient final. La matière a par conséquent tendance, lors du soufflage, à fluer dans l'interstice lorsque le fond de moule est en position basse. La matière ainsi pincée forme, lorsque le fond de moule est déplacé vers sa position haute, un mince bourrelet de matière qui persiste sur le récipient final. Ce bourrelet, formant une saillie sur l'assise du récipient, nuit à la stabilité de celui-ci.

Le besoin de stabilité est particulièrement critique pour certains récipients dont le fond peut se déformer sous l'effet d'importantes contraintes de flexion et de flambage, cf. par ex. le récipient décrit dans le document EP 2 711 152 (SIDEL PARTICIPATIONS), dont le fond comprend une membrane inversable mécaniquement pour compenser une diminution de volume du contenu accompagnant le refroidissement de celui-ci et mettre le récipient sous pression pour en accroître la rigidité.

Une première solution peut consister à ébavurer le récipient, par découpe ou par abrasion. Mais cette solution n'est pas réaliste à l'échelle industrielle, compte tenu des cadences de production (plusieurs dizaines de milliers de récipients par heure et par machine de soufflage).

Une deuxième solution peut consister à adjoindre au vérin un dispositif de guidage de précision (par exemple à billes), de façon à réduire le jeu fonctionnel entre le fond de moule et la paroi du moule. Mais cette solution se heurte à des difficultés pratiques, car l'encombrement du dispositif de guidage nécessiterait de modifier en profondeur l'architecture du moule, alors même que la place est comptée tout autour de celui-ci, compte tenu notamment de la présence de canalisations et branchements nécessaires à la circulation de fluides de régulation de température (chauffe et/ou refroidissement) dans la paroi du moule.

Une troisième solution peut consister à anticiper la commande de remontée du fond de moule, afin que la matière n'ait pas le temps de s'intercaler entre la paroi du moule et le fond de moule. Dans ces conditions toutefois, la matière destinée au fond du récipient est insuffisamment étirée, et l'assise se révèle mal formée, ce qui réduit l'intérêt du boxage.

En outre, la réduction du jeu fonctionnel entre le fond de moule et la paroi du moule est de nature à entraver l'évacuation de l'air présent dans le moule, avec un risque de malformation du récipient (à temps de cycle égal) ou de réduction du temps de cycle (à qualité du récipient égale).

Un premier objectif est de proposer une technique de fabrication de récipients permettant de réaliser une assise correctement formée et présentant à la fois une bonne rigidité et une bonne stabilité.

Plus précisément, un deuxième objectif est de proposer une technique de fabrication de récipients dont l'assise soit dépourvue de bavure.

A cet effet, il est proposé, en premier lieu, un moule pour la fabrication, à partir d'une ébauche, d'un récipient ayant un corps et un fond muni d'une assise périphérique qui s'étend sensiblement perpendiculairement au corps à partir d'une extrémité inférieure de celui-ci, ce moule comprenant :
- une paroi ayant une surface interne déterminant au moins en partie l'empreinte du corps du récipient et délimitant une cavité qui s'étend autour d'un axe central, cette surface interne se terminant, à une extrémité inférieure, par une ouverture autour de l'axe central;
- un fond de moule mobile par rapport à la paroi entre une position sortie, dans laquelle le fond de moule est écarté de l'ouverture, et une position rentrée dans laquelle le fond de moule obture l'ouverture, le fond de moule présentant une surface supérieure définissant une surface d'assise à l'empreinte de l'assise du récipient et qui s'étend à l'aplomb de l'ouverture.
Dans ce moule :
- la surface supérieure du fond de moule définit une surface périphérique qui correspond à une jonction entre l'assise et le corps du récipient, cette surface périphérique s'étendant dans le prolongement de la surface d'assise autour de celle-ci et se terminant par une arête surélevée par rapport à la surface d'assise,
- en position sortie du fond de moule, l'arête s'étend à l'aplomb de l'ouverture,
- en position rentrée du fond de moule, l'arête s'étend au voisinage de l'ouverture.

Une telle configuration permet de réaliser un plan de joint qui, au niveau de la cavité, est surélevé par rapport à la surface d'assise du fond de moule. Le récipient soufflé dans un tel moule est dépourvu sur son assise de saillie axiale, au bénéfice de sa stabilité.

Diverses caractéristiques supplémentaires peuvent être prévues, seules ou en combinaison :
- en position rentrée du fond de moule, l'arête coïncide avec l'ouverture ;
- en position rentrée du fond de moule, l'arête est décalée intérieurement de l'ouverture, d'un décalage radial ;
- le décalage est compris entre quelques dixièmes de millimètres et quelques millimètres ;
- l'arête s'étend à une distance axiale d'un périmètre externe de la surface d'assise comprise entre 0,5 et 5 mm (et de préférence comprise entre 0,5 et 3 mm), et par exemple de l'ordre de 1 mm ;
- la paroi comprend, au-delà de l'ouverture, une face supérieure de joint et la surface supérieure du fond de moule se prolonge, au-delà de l'arête, par une face inférieure de joint qui s'étend à l'aplomb de la face supérieure de joint et qui, en position rentrée du fond de moule, définit avec la face supérieure de joint un plan de joint ;
- la face supérieure de joint et la face inférieure de joint forment, en section axiale, un angle compris entre 0 et 120° ;
- la face supérieure de joint et la face inférieure de joint s'étendent perpendiculairement à l'axe central ;
- la paroi présente, dans le prolongement de la face supérieure de joint, un alésage qui s'étend axialement et le fond de moule présente, dans le prolongement de la face inférieure de joint, une jupe qui vient se loger dans l'alésage en position rentrée du fond de moule ;
- la surface périphérique est courbe et présente une concavité tournée vers la cavité ;
- la surface d'assise présente un dévers, dont l'angle est par exemple compris entre 1° et 15°, et de préférence de l'ordre de 8°.

Il est proposé, en deuxième lieu, un procédé de fabrication d'un récipient à partir d'une ébauche, qui comprend les opérations consistant à:
- introduire l'ébauche dans un moule tel que présenté ci-dessus, le fond de moule étant en position sortie,
- souffler le récipient en injectant dans l'ébauche un fluide (notamment un gaz) sous pression,
- au cours du soufflage, déplacer le fond de moule vers sa position rentrée.

D'autres objets et avantages de l'invention apparaîtront à la lumière de la description d'un mode de réalisation, faite ci-après en référence aux dessins annexés dans lesquels :
- la figure 1 est une section d'un moule équipé d'une paroi et d'un fond de moule mobile, dans une position basse correspondant au d'un cycle de formage d'un récipient à partir d'une ébauche ;
- la figure 2 est une vue de détail, à échelle agrandie, du moule de la figure 1 selon l'encart II ;
- la figure 3 est une vue de détail, à échelle encore agrandie, du moule de la figure 2 selon l'encart III ;
- la figure 4 est une vue similaire à la figure 1, montrant le fond de moule en position haute avec le récipient formé à partir de l'ébauche (représentée en pointillés) ;
- la figure 5 est une vue de détail, à échelle agrandie, du moule de la figure 4 selon l'encart V ;
- la figure 6 est une vue de détail, à échelle encore agrandie, du moule de la figure 5 selon l'encart VI ;
- la figure 7 est une vue de détail similaire à la figure 6, et illustrant une variante de réalisation.

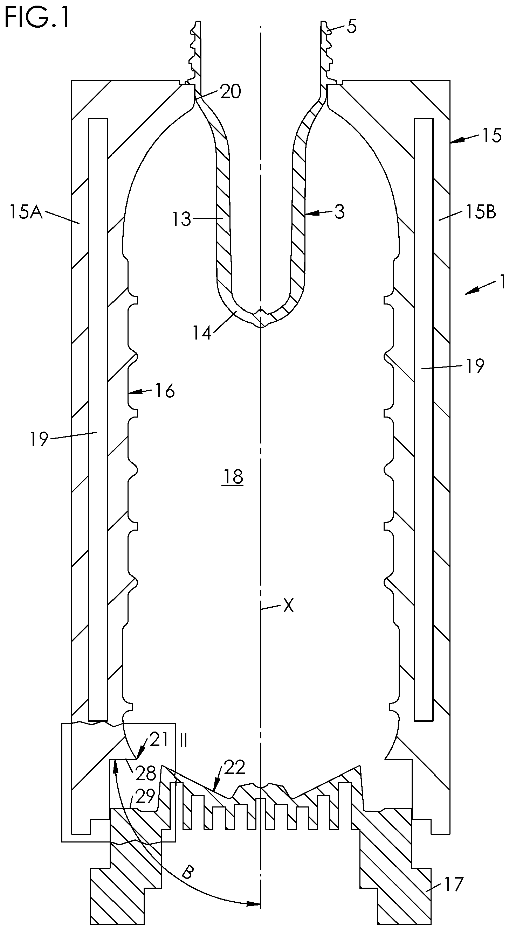

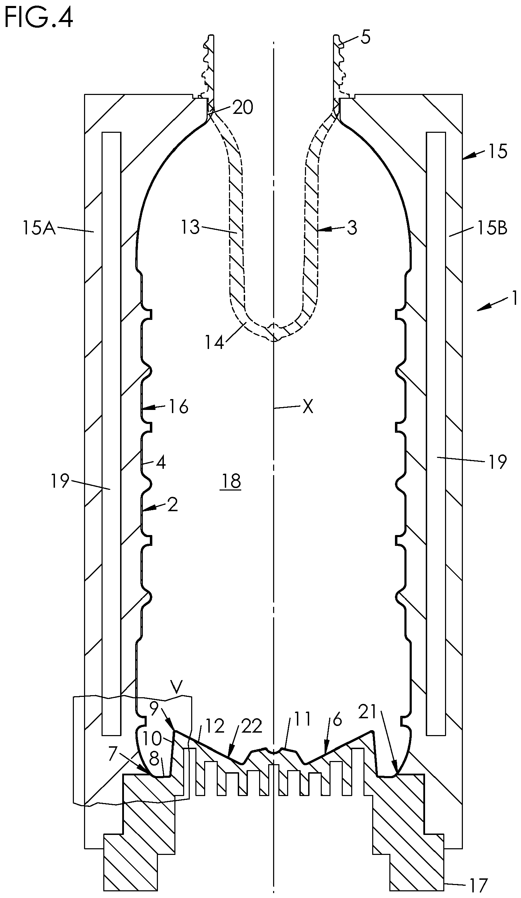

Sur les figures 1 et 4 est représenté un moule **1** pour le formage d'un récipient **2** par étirage soufflage à partir d'une ébauche **3** - en l'espèce une préforme - en matière plastique (tel que PET).

Le récipient **2** à former présente un corps **4** qui s'étend suivant un axe **X** central, un col **5** qui prolonge le corps **4** à une extrémité supérieure de celui-ci, et un fond **6** qui ferme le corps **4** à une extrémité **7** inférieure de celui-ci, opposée au col **5**.

Le fond **6** du récipient présente une assise **8** périphérique par laquelle le récipient **2** est destiné à reposer sur une surface plane telle qu'une table.

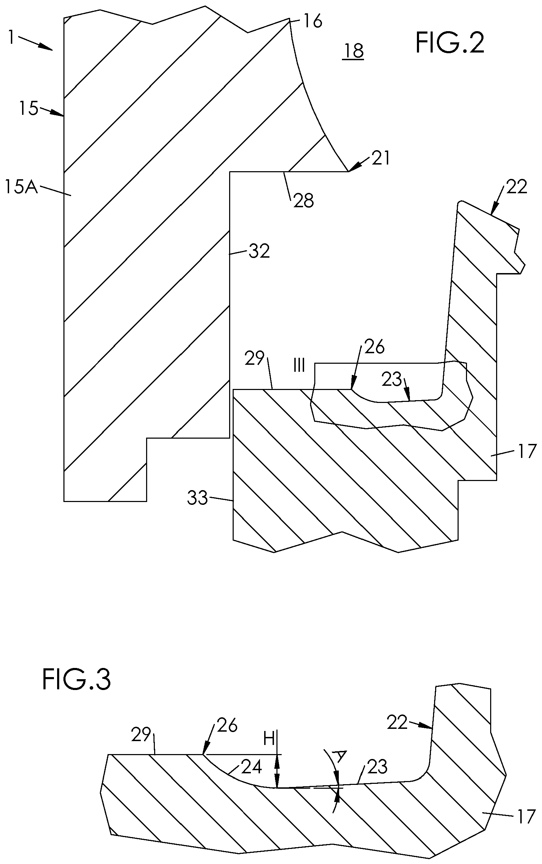

L'assise **8** n'est pas nécessairement plane mais peut présenter un dévers d'angle **A** (tout particulièrement visible sur la figure 3) dont l'utilité apparaîtra ci-après.

Le fond **6** présente une voûte **9** centrale qui prolonge l'assise **8** vers l'axe **X** central du récipient **2** et s'étend en saillie vers l'intérieur de celui-ci.

La voûte **9** présente ici une paroi **10** latérale tronconique, qui s'étend en saillie à partir d'un bord intérieur de l'assise **8** vers l'intérieur du récipient **2**, un pion **11** central qui fait également saillie vers l'intérieur du récipient **2**, et une membrane **12** tronconique qui s'étend en dévers d'un bord supérieur de la paroi **10** jusqu'à un bord périphérique du pion **11** central. Le récipient **2** à peine formé, la membrane **12** s'étend en saillie vers l'extérieur du récipient **2**. Cependant, après le remplissage (éventuellement à chaud) et le bouchage et le refroidissement du récipient **2**, le pion **11** est repoussé vers l'intérieur de celui-ci à l'aide d'un poussoir (monté par exemple sur un vérin), ce qui provoque le retournement de la membrane **12** et maintient le contenu du récipient **2** sous pression, au bénéfice de la rigidité mécanique de celui-ci. La présence d'un dévers **A** initial sur le récipient **2** issu du formage permet, après retournement de la membrane **12**, d'absorber une partie des contraintes induites par la pression du contenu qui appuie sur la voûte **9**, puis de verrouiller celle-ci, tout en procurant une bonne surface d'assise, au bénéfice de la stabilité.

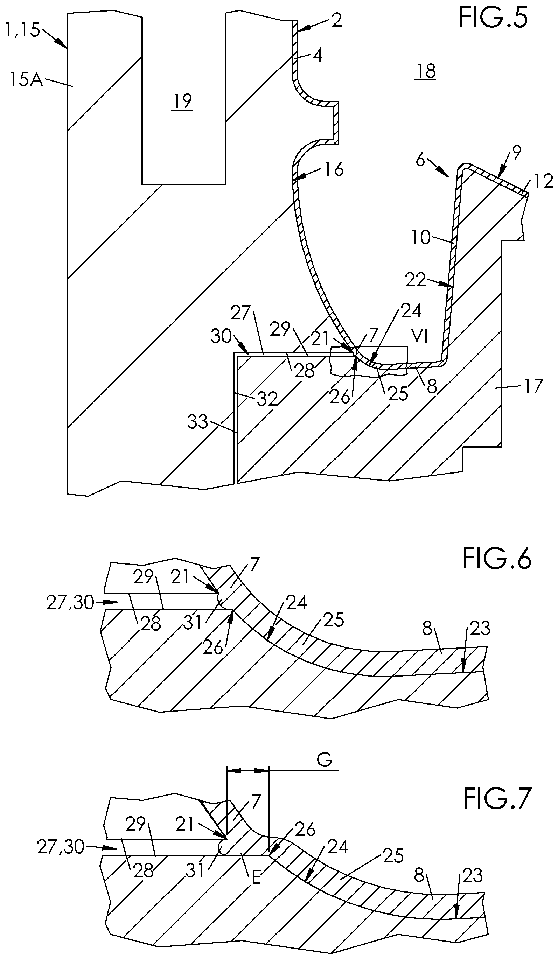

Selon un mode particulier de réalisation illustré sur les figures 4 et 5, le corps **4** du récipient **2** est cintré à son extrémité **7** inférieure, au voisinage de sa jonction avec le fond **6**. Cette forme est toutefois illustrative, et le corps **4** pourrait être droit à son extrémité **7** inférieure.

Chaque préforme **3** comprend un fût **13** sensiblement cylindrique, destiné à former le corps **4** du récipient **2,** un col **5** qui demeure inchangé sur le récipient **2**, ainsi qu'un dôme **14** hémisphérique qui ferme le fût **13** à l'opposé du col **5** et est destiné à former le fond **6** du récipient **2**.

Au moule **1** sont associés un équipement de soufflage (non représenté) incluant notamment une tuyère, des sources de gaz sous pression et des électrovannes, et, le cas échéant, une tige d'étirage qui permet de maintenir le centrage de la préforme **3** (et en particulier du dôme **14** lors du formage du récipient **2**).

Comme cela est visible sur les figures, le moule **1** comprend une paroi **15** latérale formée de préférence, selon un principe connu, de deux demi-moules **15A**, **15B**, rapprochables ou écartables mutuellement (par exemple par rotation autour d'une charnière commune) et ayant des surfaces usinées qui, lorsque les demi-moules **15**A, **15**B sont au contact l'un de l'autre, forment conjointement une surface **16** interne déterminant l'empreinte du corps **4** du récipient **2**.

Le moule **1** comprend encore un fond **17** de moule déterminant l'empreinte du fond **6** du récipient **2**. La surface **16** interne délimite une cavité **18** dans laquelle est introduite la préforme **3** et dans laquelle se déroule le formage du récipient **2**.

Comme on le voit sur les figures 1 et 4, la paroi **15**, respectivement chaque demi-moule **15A**, **15B**, est percé(e) de canaux **19** pour la circulation de fluides de régulation de température (chauffe et/ou refroidissement) de la paroi **15**. Alternativement, à la place des canaux **19**, ou en complément de ceux-ci, chaque demi-moule **15A**, **15B** peut intégrer des éléments chauffants électriques, tels que des résistances.

La surface **16** interne s'étend autour d'un axe central confondu avec l'axe **X** central du récipient **2** à former. La surface **16** interne se termine, à une extrémité supérieure, par une ouverture **20** au travers de laquelle s'étend le fût **13** de la préforme **3** lorsqu'elle est en place dans le moule **1**, et, à une extrémité inférieure opposée, par une ouverture **21** qui s'étend autour de l'axe **X** central.

Le fond **17** de moule est monté déplaçable axialement par rapport à la paroi **15** entre une position sortie, dans laquelle le fond **17** de moule est écarté de l'ouverture **21**, et une position rentrée, dans laquelle le fond **17** de moule obture l'ouverture **21**. La mobilité du fond **17** de moule vise à permettre, au cours du formage, un étirage supplémentaire du fond **6** du récipient **2**, au cours d'une opération appelée boxage lors de laquelle le fond **17** de moule, initialement en position sortie, est déplacé vers sa position rentrée. A cet effet, le fond **17** de moule est par exemple monté sur un vérin pneumatique ou hydraulique (non représenté).

Dans la configuration illustrée sur les figures - donnée à titre d'exemple illustratif - où le récipient **2** est orienté col **5** en haut, la position sortie du fond **17** de moule correspond à une position basse, et sa position rentrée à une position haute.

Le fond **17** de moule présente une surface **22** supérieure qui, en position haute du fond **17** de moule, ferme la cavité **18** en obturant l'ouverture **21**, complétant ainsi l'empreinte contre laquelle est appliquée la matière lors du formage du récipient **2**.

La surface **22** supérieure définit à sa périphérie une surface **23** d'assise à l'empreinte de l'assise **8** du récipient **2**. La surface **23** d'assise s'étend de manière périphérique autour de l'axe **X** central. Dans le cas où l'assise **8** du récipient **2** présente un dévers, la surface **23** d'assise présente de manière correspondante un dévers d'angle **A**. L'angle **A** du dévers est par exemple compris entre 1° et 15°. Selon un mode particulier de réalisation, l'angle **A** de dévers est de l'ordre de 8°.

Comme on le voit bien sur les figures 2 et 3, la surface supérieure du fond de moule définit une surface **24** périphérique qui s'étend dans le prolongement de la surface d'assise autour de celle-ci. Cette surface **24** périphérique correspond à une jonction **25** entre le corps **4** et l'assise **8** du récipient **2**. Cette surface **24** périphérique se termine extérieurement par une arête **26** surélevée par rapport à la surface **23** d'assise, en direction de la cavité **18**. En d'autres termes, la surface **24** périphérique forme une surépaisseur en saillie à partir de la surface **23** d'assise. On note **H** la hauteur de cette surépaisseur, mesurée axialement à partir du périmètre externe de la surface **23** d'assise.

Dans l'exemple illustré, la jonction **25** se présente sous forme d'un congé de raccordement à section en arc de cercle. Dans ce cas, la surface **24** périphérique est courbe et présente une concavité tournée vers la cavité, et son rayon est égal au rayon du congé de raccordement formant la jonction **25**.

En position sortie du fond **17** de moule, l'arête **26** s'étend à l'aplomb de l'ouverture **21**. En position rentrée du fond **17** de moule, l'arête **26** s'étend au voisinage de l'ouverture **21**. Selon un mode de réalisation illustré sur les figures 5 et 6, les diamètres internes définis respectivement par l'arête **26** et l'ouverture **21** sont sensiblement identiques, de sorte que, en position rentrée du fond **17** de moule, l'arête **26** coïncide avec l'ouverture **21**. Le terme « coïncide » n'implique pas nécessairement que l'arête **26** et l'ouverture **21** sont confondues en position rentrée du fond **17** de moule ; comme nous le verrons ci-après, un interstice **27** peut être ménagé entre elles. Quoi qu'il en soit, lorsque le fond **17** de moule est dans sa position rentrée, l'arête **26** s'étend au niveau de l'extrémité **7** inférieure du corps **4**. Selon une variante de réalisation illustrée sur la figure 7, le diamètre interne défini par l'arête **26** est inférieur à celui de l'ouverture **21**, au point qu'en position rentrée du fond **17** de moule l'arête **26** est décalée intérieurement de l'ouverture **21** d'un décalage **G** radial. Ce décalage **G** est compris entre quelques dixièmes de millimètres et quelques millimètres. Dans l'exemple illustré, ce décalage **G** est inférieur ou égal à 1,5 mm, et par ex. de l'ordre de 1 mm environ.

Selon un mode particulier de réalisation, illustré sur les figures, la paroi **15** latérale du moule **1** comprend, au-delà (radialement) de l'ouverture **21**, une face **28** supérieure de joint et, de manière correspondante, la surface **22** supérieure du fond se prolonge, au-delà de l'arête **26**, par une face **29** inférieure qui s'étend à l'aplomb de la face **28** supérieure de joint. Comme illustré sur les figures 5 et 6, lorsque le fond **17** de moule est en position rentrée, la face **28** supérieure de joint et la face **29** inférieure de joint forment conjointement un plan **30** de joint périphérique.

L'expression « plan de joint » désigne une jonction surfacique entre deux pièces complémentaires, qui n'est pas nécessairement plane mais peut être de toute autre forme, notamment tronconique.

On note **B** l'angle formé en section axiale par la face **28** supérieure de joint (et par la face **29** inférieure de joint) avec l'axe **X** central. Cet angle **B** est compris entre 0° (auquel cas le plan **30** de joint est cylindrique) et 120° (auquel cas le plan **30** de joint est conique, à pointe tournée à l'opposé de la cavité **18**).

Selon un mode de réalisation préféré toutefois, l'angle **B** est droit, c'est-à-dire que la face **28** supérieure de joint et la face **29** inférieure de joint s'étendent perpendiculairement à l'axe **X** central. En d'autres termes, la face **28** supérieure de joint et la face **29** inférieure de joint, et donc le plan **30** de joint, sont plans.

Comme nous l'avons vu, en position haute du fond **17** de moule, un contact n'est pas nécessairement réalisé entre la face **28** supérieure de joint et la face **29** inférieure de joint, au niveau du plan **30** de joint, en raison de l'interstice **27**.

Cet interstice **27**, qui réalise un jeu, remplit une fonction d'évent, visant à permettre l'évacuation de l'air piégé entre le récipient **2** et le moule **1** à la fin du formage. Cela permet de former correctement l'assise **8**, notamment à sa jonction avec l'extrémité **7** inférieure du corps **4**. A défaut, il pourrait persister une bulle (ou des bulles) d'air à cette jonction, ce qui déformerait l'assise **8** et, à tout le moins, pourrait en réduire la largeur au détriment de la stabilité du récipient **2**.

Le jeu formé par l'interstice **27** au niveau du plan **30** de joint en position haute du fond **17** de moule est de préférence de l'ordre de quelques dixièmes de millimètre, ou limitant le fluage de la matière à la fin du soufflage, lorsque le fond **17** de moule est en position haute.

Il se peut néanmoins qu'une bavure **31** apparaisse sur le récipient **2** au cours du formage, par fluage d'une partie de la matière dans l'interstice **27** sous la pression élevée régnant dans le récipient **2**. Mais, compte tenu de la distance (ou hauteur) **H** axiale séparant, au niveau de la surface **16** interne du moule **1**, le plan **30** de joint du périmètre externe de la surface **23** d'assise, cette bavure **31** s'étend à la même distance **H** du périmètre externe de l'assise **8** par laquelle le récipient repose sur une surface plane. L'assise **8** étant dépourvue de bavure (laquelle, si elle existe, est déportée sur le corps **4**), il en résulte une bonne stabilité du récipient **2**. Lorsqu'un décalage **G** est prévu entre l'arête **26** et l'ouverture **21**, il est généré sur le récipient **2** un épaulement **E** annulaire dans lequel, d'un point de vue esthétique, la bavure **31** éventuelle se fond et peut apparaître comme non fortuite du point de vue de l'utilisateur, tout en ayant l'avantage, du point de vue de l'expert, de témoigner du bon déroulement du formage.

La hauteur **H** est de préférence comprise entre 0,5 et 5 mm, notamment en fonction du rayon du congé de raccordement formant la jonction **25** entre le corps **4** et l'assise **8**. Selon un mode préféré de réalisation, la hauteur **H** est comprise entre 0,5 et 5 mm, et par exemple de l'ordre de 1 mm. Cette valeur permet d'écarter suffisamment la bavure **31** de l'assise **8** pour éviter tout défaut de stabilité, tout en préservant l'esthétique du récipient **2**, la bavure demeurant relativement discrète du point de vue d'un consommateur.

Selon un mode de réalisation illustré sur les figures, la paroi **15** latérale du moule **1** présente, dans le prolongement de la face **28** supérieure de joint, un alésage **32** qui s'étend axialement à partir d'un périmètre externe de la face **28** supérieure, et, de manière correspondante, le fond **17** de moule présente, dans le prolongement axial de la face **29** inférieure de joint, une jupe **33** qui, en position rentrée du fond **17** de moule, vient se loger dans l'alésage **32** (cf. notamment la figure 5).

La jupe **33** présente un diamètre extérieur inférieur au diamètre intérieur de l'alésage **32**, de sorte que soit ménagé entre la jupe **33** et l'alésage **32** un jeu de fonctionnement de l'ordre de quelques dixièmes de millimètres. Il en résulte une canalisation du flux d'air évacué de la cavité **18** au niveau du fond **17** de moule, lors du soufflage du récipient **2**.

Le moule **1** décrit ci-dessus présente les avantages suivants.

Premièrement, comme nous l'avons vu, l'écartement axial du plan **30** de joint de la surface **23** d'assise évite la formation, sur l'assise **8** du récipient **2**, d'une bavure en saillie axiale qui nuirait à la stabilité de celui-ci. Et, lorsqu'une bavure **31** existe, sous forme d'une collerette ou d'un bourrelet formé en saillie à l'extrémité **7** inférieure du corps **4**, une telle bavure **31** radiale ne nuit pas à la stabilité du récipient **2**.

Deuxièmement, la localisation d'une telle bavure **31** au voisinage du fond **6** la rend à peu près imperceptible par l'utilisateur final du récipient **2**, au bénéfice de la qualité perçue de celui-ci.

Troisièmement, grâce au déport du plan **30** de joint, la présence d'une éventuelle bavure **31** ne dépend plus de la précision de guidage du fond **17** de moule. L'on peut donc choisir pour le fond **17** de moule un actionneur linéaire (tel qu'un vérin) relativement imprécis mais robuste, au bénéfice d'une meilleure fiabilité du moule **1**. Il en résulte également une meilleure évacuation de l'air présent dans la cavité **18**, grâce à la détente que subit l'air entre la paroi **15** latérale du moule **1** et le fond **17** de moule.

Quatrièmement, grâce également au déport du plan **30** de joint vers l'extérieur, il est possible de retarder la remontée du fond **17** de moule sans risque d'endommager la matière, au bénéfice d'une meilleure prise d'empreinte et d'un meilleur étirage du fond **6** du récipient **2**.

La fabrication du récipient **2** est réalisée comme suit.

On commence par introduire la préforme **3** préchauffée dans le moule **1** ouvert. Le fond **17** de moule est alors en position basse. Le moule **1** est refermé et un gaz (typiquement de l'air) sous une pression de présoufflage (de l'ordre de 5 à 13 bars) est injecté dans la préforme **3**. A cette opération d'injection peut être associée une opération d'étirage, qui consiste à étirer la préforme **3** au moyen d'une tige mobile qui vient plaquer le dôme **14** de la préforme **3** contre le fond **17** de moule.

Lorsque le dôme **14** de la préforme **3** atteint le fond **17** de moule, celui-ci se trouve toujours dans sa position basse. La pression de présoufflage n'est pas suffisante pour plaquer la matière intimement contre la paroi **15** latérale du moule **1** ; il est nécessaire pour cela d'injecter dans le récipient **2** en formation un gaz (typiquement de l'air) à une pression de soufflage supérieure à la pression de présoufflage (en pratique la pression de soufflage est de l'ordre de 20 à 40 bars).

La remontée du fond **17** de moule est de préférence initiée immédiatement avant l'opération de soufflage, cette remontée conférant à la matière du fond **6** un étirage supplémentaire favorable à l'orientation des molécules et à la prise d'empreinte de la matière sur la surface **22** supérieure du fond **17** de moule.

Si de la matière flue à l'extérieur du périmètre de l'ouverture **20**, cette matière demeure en faible quantité et forme au niveau du plan **30** de joint, en position haute du fond **17** de moule, une bavure **31** de faible épaisseur et de faible extension radiale, comme illustré sur la figure 6.

Lorsqu'on souhaite réaliser une thermofixation, la pression de soufflage est maintenue temporairement dans le récipient **2** ainsi formé pour maintenir celui-ci en contact avec la paroi **15** latérale chauffée, de façon à accroître la cristallinité de la matière, et ainsi augmenter la résistance mécanique du récipient **2** lors de son remplissage à chaud (c'est-à-dire avec un contenu, liquide ou pâteux, dont la température est comprise entre 80°C et 90°C environ).

L'intérieur du récipient **2** est ensuite mis à l'air libre, la tige (lorsqu'elle existe) retirée et le récipient **2** évacué avant que le cycle ne soit répété pour le récipient suivant.

## Revendications

1. Moule (**1**) pour la fabrication, à partir d'une ébauche (**3**), d'un récipient (**2**) ayant un corps (**4**) et un fond (**6**) muni d'une assise (**8**) périphérique qui s'étend sensiblement perpendiculairement au corps (**4**) à partir d'une extrémité (**7**) inférieure de celui-ci, ce moule (**1**) comprenant :
- une paroi (**15**) ayant une surface (**16**) interne déterminant au moins en partie l'empreinte du corps (**4**) du récipient (**2**) et délimitant une cavité (**18**) qui s'étend autour d'un axe (**X**) central, cette surface (**16**) interne se terminant, à une extrémité inférieure, par une ouverture (**21**) autour de l'axe (**X**) central ;
- un fond (**17**) de moule mobile par rapport à la paroi (**15**) entre une position sortie, dans laquelle le fond (**17**) de moule est écarté de l'ouverture (**21**), et une position rentrée dans laquelle le fond (**17**) de moule obture l'ouverture (**21**), le fond (**17**) de moule présentant une surface (**22**) supérieure définissant une surface (**23**) d'assise à l'empreinte de l'assise (**8**) du récipient (**2**) et qui s'étend à l'aplomb de l'ouverture (**21**) ;
ce moule étant **caractérisé en ce que** :
- la surface (**22**) supérieure du fond (**17**) de moule définit une surface (**24**) périphérique qui correspond à une jonction (**25**) entre l'assise (**8**) et le corps (**4**) du récipient (**2**), cette surface (**24**) périphérique s'étendant dans le prolongement de la surface (**23**) d'assise autour de celle-ci et se terminant par une arête (**26**) surélevée par rapport à la surface (**23**) d'assise,
- en position sortie du fond (**17**) de moule, l'arête (**26**) s'étend à l'aplomb de l'ouverture (**21**),
- en position rentrée du fond (**17**) de moule, l'arête (**26**) s'étend au voisinage de l'ouverture (**21**).

2. Moule (**1**) selon la revendication 1, **caractérisé en ce que**, en position rentrée du fond (**17**) de moule, l'arête (**26**) coïncide avec l'ouverture (**21**)**.**

3. Moule (**1**) selon la revendication 1, **caractérisé en ce que**, en position rentrée du fond (**17**) de moule, l'arête (**26**) est décalée intérieurement de l'ouverture (**21**), d'un décalage (**G**) radial.

4. Moule (1) selon la revendication 3, **caractérisé en ce que** le décalage (**G**) est compris entre quelques dixièmes de millimètres et quelques millimètres.

5. Moule (**1**) selon l'une des revendications précédentes, **caractérisé en ce que** l'arête (**26**) s'étend à une distance (**H**) axiale d'un périmètre externe de la surface (**23**) d'assise comprise entre 0,5 et 5 mm.

6. Moule (**1**) selon la revendication 5, **caractérisé en ce que** la distance (**H**) axiale de l'arête (**26**) au périmètre externe de la surface (**23**) d'assise est de l'ordre de 1 mm.

7. Moule (**1**) selon l'une des revendications précédentes, **caractérisé en ce que** :
- la paroi (**15**) comprend, au-delà de l'ouverture (**21**), une face (**28**) supérieure de joint,
- la surface (**22**) supérieure du fond (**17**) de moule se prolonge, au-delà de l'arête (**26**), par une face (**29**) inférieure de joint qui s'étend à l'aplomb de la face (**28**) supérieure de joint et qui, en position rentrée du fond (**17**) de moule, définit avec la face (**28**) supérieure de joint un plan (**30**) de joint.

8. Moule (**1**) selon la revendication 7, **caractérisé en ce que** la face (**28**) supérieure de joint et la face (**29**) inférieure de joint forment avec l'axe (**X**) central, en section axiale, un angle (**B**) compris entre 0° et 120°.

9. Moule (**1**) selon la revendication 8, **caractérisé en ce que** la face (28) supérieure de joint et la face (**29**) inférieure de joint s'étendent perpendiculairement à l'axe (**X**) central.

10. Moule (**1**) selon l'une des revendications 7 à 9, **caractérisé en ce que** :
- la paroi (**15**) présente, dans le prolongement de la face (**28**) supérieure de joint, un alésage (**32**) qui s'étend axialement,
- le fond (**17**) de moule présente, dans le prolongement de la face (**29**) inférieure de joint, une jupe (**33**) qui vient se loger dans l'alésage (**32**) en position rentrée du fond (**17**) de moule.

11. Moule (**1**) selon l'une des revendications précédentes, **caractérisée en ce que** la surface (**24**) périphérique est courbe et présente une concavité tournée vers la cavité (**18**).

12. Moule (**1**) selon l'une des revendications précédentes, **caractérisé en ce que** la surface (**23**) d'assise présente un dévers.

13. Moule (**1**) selon la revendication 12, **caractérisé en ce que** l'angle (**A**) du dévers est compris entre 1° et 15°.

14. Moule (**1**) selon la revendication 13, **caractérisé en ce que** le dévers présente un angle (**A**) de l'ordre de 8°.

15. Procédé de fabrication d'un récipient (**2**) à partir d'une ébauche (3), **caractérisé en ce qu'**il comprend les opérations consistant à :
- introduire l'ébauche (**3**) dans un moule (**1**) selon l'une des revendications précédentes, le fond (**17**) de moule étant en position sortie,
- souffler le récipient (**2**) en injectant dans l'ébauche (**3**) un fluide sous pression,
- au cours du soufflage, déplacer le fond (**17**) de moule vers sa position rentrée.

## Patentansprüche

1. Form (1), um ausgehend von einem Rohling (3) einen Behälter (2) herzustellen, der einen Körper (4) und einen Boden (6), der mit einem Umfangsbasis (8) versehen ist, der sich von einem unteren Ende (7) des Körpers (4) im Wesentlichen senkrecht hierzu erstreckt, besitzt, wobei diese Form (1) Folgendes umfasst:
- eine Wand (15), die eine innere Oberfläche (16) besitzt, die wenigstens zum Teil die Standfläche des Körpers (4) des Behälters (2) bestimmt und einen Hohlraum (18) begrenzt, der sich um eine Mittelachse (X) erstreckt, wobei diese innere Oberfläche (16) an einem unteren Ende in einer Öffnung (21) um die Mittelachse (X) endet;
- einen Formboden (17), der in Bezug auf die Wand (15) zwischen einer Ausgangsposition, in der der Formboden (17) von der Öffnung (21) beabstandet ist, und einer zurückgezogenen Position, in der der Formboden (17) die Öffnung (21) verschließt, beweglich ist, wobei der Formboden (17) eine obere Oberfläche (22) aufweist, die eine Basisoberfläche (23) bei der Standfläche der Basis (8) des Aufnahmebehälters (2) definiert und sich senkrecht zu der Öffnung (21) erstreckt;
wobei diese Form **dadurch gekennzeichnet ist, dass**:
- die obere Oberfläche (22) des Formbodens (17) eine Umfangsoberfläche (24) definiert, die einer Verbindung (25) zwischen der Basis (8) und dem Körper (4) des Behälters (2) entspricht, wobei sich diese Umfangsoberfläche (24) in der Verlängerung der Basisoberfläche (23) um diesen erstreckt und in einer Kante (26) endet, die sich über der Basisoberfläche (23) befindet,
- in der Ausgangsposition des Formbodens (17) die Kante (26) sich senkrecht zu der Öffnung (21) erstreckt,
- in der zurückgezogenen Position des Formbodens (17) die Kante (26) sich in die Umgebung der Öffnung (21) erstreckt.

2. Form (1) nach Anspruch 1, **dadurch gekennzeichnet, dass** in der zurückgezogenen Position des Formbodens (17) die Kante (26) mit der Öffnung (21) übereinstimmt.

3. Form (1) nach Anspruch 1, **dadurch gekennzeichnet, dass** in der zurückgezogenen Position des Formbodens (17) die Kante (26) von der Öffnung (21) um einen radialen Versatz (G) nach innen versetzt ist.

4. Form (1) nach Anspruch 3, **dadurch gekennzeichnet, dass** der Versatz (G) im Bereich von einigen Zehntel Millimetern bis zu einigen Millimetern liegt.

5. Form (1) nach einem der vorhergehenden Ansprüche, **dadurch gekennzeichnet, dass** sich die Kante (26) vom äußeren Umfang der Basisoberfläche (23) in einem axialen Abstand (H), der im Bereich von 0,5 bis 5 mm liegt, erstreckt.

6. Form (1) nach Anspruch 5, **dadurch gekennzeichnet, dass** der axiale Abstand (H) der Kante (26) zum äußeren Umfang der Basisoberfläche (23) in der Größenordnung von 1 mm liegt.

7. Form (1) nach einem der vorhergehenden Ansprüche, **dadurch gekennzeichnet, dass**:
- die Wand (15) jenseits der Öffnung (21) eine obere Verbindungsfläche (28) aufweist,
- die obere Oberfläche (22) des Formbodens über die Kante (26) hinaus durch eine untere Verbindungsfläche (29) verlängert ist, die sich senkrecht zu der oberen Verbindungsfläche (28) erstreckt und in der zurückgezogenen Position des Formbodens (17) mit der oberen Verbindungsfläche (28) eine Verbindungsebene (30) definiert.

8. Form (1) nach Anspruch 7, **dadurch gekennzeichnet, dass** die obere Verbindungsfläche (28) und die untere Verbindungsfläche (29) mit der Mittelachse (X) im axialen Querschnitt einen Winkel (B) im Bereich von 0° bis 120° bilden.

9. Form (1) nach Anspruch 8, **dadurch gekennzeichnet, dass** sich die obere Verbindungsfläche (28) und die untere Verbindungsfläche (29) senkrecht zu der Mittelachse (X) erstrecken.

10. Form (1) nach einem der Ansprüche 7 bis 9, **dadurch gekennzeichnet, dass**:
- die Wand (15) in der Verlängerung der oberen Verbindungsfläche (28) eine Bohrung (32) aufweist, die sich axial erstreckt,
- der Formboden (17) in der Verlängerung der unteren Verbindungsfläche (29) eine Schürze (33) aufweist, die sich in der zurückgezogenen Position des Formbodens (17) in der Bohrung (32) befindet.

11. Form (1) nach einem der vorhergehenden Ansprüche, **dadurch gekennzeichnet, dass** die Umfangsoberfläche (24) gekrümmt ist und eine zu dem Hohlraum (18) gewendete Konkavität aufweist.

12. Form (1) nach einem der vorhergehenden Ansprüche, **dadurch gekennzeichnet, dass** die Basisoberfläche (23) eine Schräge aufweist.

13. Form (1) nach Anspruch 12, **dadurch gekennzeichnet, dass** der Winkel (A) der Schräge im Bereich von 1° bis 15° liegt.

14. Form (1) nach Anspruch 13, **dadurch gekennzeichnet, dass** die Schräge einen Winkel (A) in der Größenordnung von 8° besitzt.

15. Verfahren zum Herstellen eines Behälters (2) ausgehend von einem Rohling (3), **dadurch gekennzeichnet, dass** es die folgenden Schritte umfasst:
- Einsetzen des Rohlings (3) in eine Form (1) nach einem der vorhergehenden Ansprüche, wobei sich der Formboden (17) in der Ausgangsposition befindet,
- Blasen des Behälters (2) durch Einspritzen eines mit Druck beaufschlagten Fluids in den Rohling (3),
- während des Blasens Verlagern des Formbodens (17) in seine zurückgezogene Position.

## Claims

1. Mould (1) for manufacturing, from a parison (3), a container (2) having a body (4) and a bottom (6) provided with a peripheral seating (8) which extends substantially perpendicular to the body (4) from a lower end (7) thereof, this mould (1) comprising:
- a wall (15) having an internal surface (16) at least in part determining the impression of the body (4) of the container (2) and delimiting a cavity (18) which extends about a central axis (X), this internal surface (16) terminating, at a lower end, in an opening (21) about the central axis (X);
- a mould bottom (17) able to move with respect to the wall (15) between an "out" position in which the mould bottom (17) is away from the opening (21) and an inserted position in which the mould bottom (17) plugs the opening (21), the mould bottom (17) exhibiting an upper surface (22) that defines a seating surface (23) in the impression of the seating (8) of the container (2) and which extends flush with the opening (21);
this mould being **characterized in that**:
- the upper surface (22) of the mould bottom (17) defines a peripheral surface (24) which corresponds to a junction (25) between the seating (8) and the body (4) of the container (2), this peripheral surface (24) extending in the continuation of the seating surface (23) around the latter and terminating in an edge corner (26) that is raised in relation to the seating surface (23),
- when the mould bottom (17) is in the "out" position, the edge corner (26) extends flush with the opening (21),
- when the mould bottom (17) is in the inserted position, the edge corner (26) extends in the vicinity of the opening (21).

2. Mould (1) according to Claim 1, **characterized in that**, when the mould bottom (17) is in the inserted position, the edge corner (26) coincides with the opening (21).

3. Mould (1) according to Claim 1, **characterized in that**, when the mould bottom (17) is in the inserted position, the edge corner (26) is offset towards the inside of the opening (21) by a radial offset (G).

4. Mould (1) according to Claim 3, **characterized in that** the offset (G) is comprised between a few tenths of a millimetre and a few millimetres.

5. Mould (1) according to one of the preceding claims, **characterized in that** the edge corner (26) extends at an axial distance (H) from an external perimeter of the seating surface (23) which is comprised between 0.5 and 5 mm.

6. Mould (1) according to Claim 5, **characterized in that** the axial distance (H) of the edge corner (26) from the external perimeter of the seating surface (23) is of the order of 1 mm.

7. Mould (1) according to one of the preceding claims, **characterized in that**:
- the wall (15) comprises, beyond the opening (21), an upper meeting face (28),
- the upper surface (22) of the mould bottom (17) is extended, beyond the edge corner (26), by a lower meeting face (29) which extends flush with the upper meeting face (28) and which, when the mould bottom (17) is in the inserted position, together with the upper meeting face (28) defines a parting plane (30).

8. Mould (1) according to Claim 7, **characterized in that** the upper meeting face (28) and the lower meeting face (29) form, with the central axis (X) in axial cross section, an angle (B) of between 0° and 120°.

9. Mould (1) according to Claim 8, **characterized in that** the upper meeting face (28) and the lower meeting face (29) extend perpendicular to the central axis (X).

10. Mould (1) according to one of Claims 7 to 9, **characterized in that**:
- the wall (15) exhibits, in the continuation of the upper meeting face, a bore (32) which extends axially,
- the mould bottom (17) exhibits, in the continuation of the lower meeting face (29), a skirt (33) which fits into the bore (32) when the mould bottom (17) is in the inserted position.

11. Mould (1) according to one of the preceding claims, **characterized in that** the peripheral surface (24) is curved and has a concave side facing toward the cavity (18).

12. Mould (1) according to one of the preceding claims, **characterized in that** the seating surface (23) slopes.

13. Mould (1) according to Claim 12, **characterized in that** the angle (A) of the slope is comprised between 1° and 15°.

14. Mould (1) according to Claim 13, **characterized in that** the slope has an angle (A) of the order of 8°.

15. Method for manufacturing a container (2) from a parison (3), **characterized in that** it comprises the operations consisting in:
- introducing the parison (3) into a mould (1) according to one of the preceding claims, the mould bottom (17) being in the "out" position,
- blow-moulding the container (2) by injecting a pressurized fluid into the parison (3),
- during the blowing, moving the mould bottom (17) towards its inserted position.
